# FASCICULE DE BREVET EUROPEEN

(11) **EP 2 577 028 B1**
(45) Date de publication et mention de la délivrance du brevet: **10.02.2016**
(21) Numéro de dépôt: 11726899.5
(22) Date de dépôt: 25.05.2011
(51) Int. Cl.: F02M 35/104, F02M 21/02, F02M 35/10, F02D 19/06

(54) **MODULE D'ADMISSION POUR MOTEUR A COMBUSTION**
EINLASSMODUL FÜR EINEN VERBRENNUNGSMOTOR
INTAKE MODULE FOR A COMBUSTION ENGINE

(30) Priorité: 01.06.2010 FR 1054248
(43) Date de publication de la demande: 10.04.2013
(73) Titulaire: PSA Peugeot Citroën Automobiles S.A., 78140 Velizy Villacoublay (FR)
(72) Inventeur: BONNET, Pascal, F-77600 Bussy Saint Georges (FR); VASSEUR, Arnaud, F-62160 Bully Les Mines (FR)
(74) Mandataire: Laurin, Ghislain Nicolas
(86) Numéro de dépôt international: PCT/FR2011/051183
(87) Numéro de publication internationale: WO 2011/151568

(56) Documents cités:
- EP-A2- 1 074 732
- WO-A1-2009/136883
- AU-A- 6 182 494
- GB-A- 2 024 316
- JP-A- 2004 036 482
- US-A- 5 823 156
- US-A- 5 832 905
- US-A1- 2004 084 032

## Description

La présente invention revendique la priorité de la demande française 1054248 déposée le 1er juin 2010 dont le contenu (texte, dessins et revendications) est ici incorporé par référence.

### DOMAINE TECHNIQUE

Un aspect de l'invention concerne un moteur à combustion équipé d'un module d'admission fonctionnant avec un carburant liquide, ledit module couramment appelé « collecteur d'admission » et aussi « répartiteur ». Un autre aspect de l'invention concerne un véhicule comprenant un moteur à combustion muni d'un module d'admission. Encore un autre aspect de l'invention concerne un procédé pour adapter un moteur à combustion à fonctionnement avec un carburant liquide à un fonctionnement avec un carburant gazeux.

### ETAT DE LA TECHNIQUE ANTERIEURE

Un module d'admission pour moteur à combustion a pour fonction d'apporter de l'air aux cylindres dans le moteur à combustion. Dans le module d'admission, il existe donc une voie d'admission pour un cylindre donné par laquelle ce cylindre reçoit de l'air. Le module d'admission comprend typiquement une paroi ayant une face intérieure qui délimite au moins partiellement la voie d'admission. Une face extérieure de la paroi est typiquement visible et accessible lorsque, par exemple, un capot d'un véhicule muni du module d'admission est ouvert.

La demande de brevet américain publiée sous le numéro 2004/0149255 décrit un moteur à combustion muni d'un système d'admission comprenant une tubulure d'admission et un port d'admission pour diriger de l'air admis, ou un mélange air/carburant, dans une chambre à combustion. Ce moteur à combustion peut fonctionner dans différents modes : un mode diesel, un mode de transition à deux carburants, et un mode d'allumage par étincelle. Le moteur à combustion peut fonctionner avec du gaz naturel comme carburant. Le gaz naturel peut être injecté dans le système d'admission au moyen d'un injecteur.

US 5,832,905 A divulgue plusieurs méthodes d'adaptation d'un moteur fonctionnant uniquement avec un carburant liquide au fonctionnement avec le carburant liquide et avec un carburant gazeux.

Le procédé suivant peut être appliqué afin d'adapter un moteur à combustion à un fonctionnement avec un carburant gazeux. Dans une première étape, des trous sont percés dans le module d'admission, un trou par cylindre. Les trous sont percés de la face extérieure de la paroi du module d'admission vers la face intérieure délimitant les voies d'admission respectives pour les cylindres respectifs. Le trou percé pour un cylindre débouche idéalement sur la voie d'admission par laquelle le cylindre en question reçoit de l'air. Suite au perçage des trous, ceux-ci peuvent être munis d'un filetage. Dans une seconde étape, des injecteurs de carburant gazeux sont montés dans les trous. Ensuite, les injecteurs de carburant gazeux sont reliés à une chaîne d'alimentation en carburant gazeux au moyen de conduits.

Le procédé permet d'adapter un moteur à combustion fonctionnant avec du carburant liquide comme, par exemple, de l'essence, afin que le moteur à combustion puisse également fonctionner avec un carburant gazeux comme, par exemple, du Gaz de Pétrole Liquéfié (GPL) ou du Gaz Naturel pour Véhicule (GNV). Ce procédé est couramment appliqué par des services après-vente, ou tout autre atelier pour moteur à combustion, à la demande d'un client qui souhaite une adaptation au carburant gazeux.

### EXPOSE DE L'INVENTION

Il existe un besoin pour une solution permettant une adaptation au carburant gazeux de façon facile et réussie.

Selon un aspect de l'invention, un moteur à combustion équipé d'un module d'admission fonctionnant avec un carburant gazeux, le module d'admission comprenant une paroi ayant une face extérieure et une face intérieure délimitant au moins partiellement une voie d'admission dans le module d'admission par laquelle de l'air peut être apporté à un cylindre dans le moteur à combustion, est caractérisé en ce que la face extérieure de la paroi comprend une saillie pleine définissant un axe de perçage orienté de la face extérieure vers la voie d'admission pour montage, après perçage, dans le trou centré sur l'axe de perçage, d'un injecteur de carburant gazeux.

La saillie définit un emplacement et une orientation d'un perçage pour introduire du carburant gazeux dans un flux d'air vers le cylindre. Ainsi, le perçage peut être précis de façon à ce que le carburant gazeux peut être injecté dans une zone particulière permettant une combustion homogène du carburant gazeux dans le cylindre. En outre, l'emplacement et l'orientation du perçage peuvent être tels qu'un conduit peut être convenablement posé, sans que le conduit soit excessivement plié, afin de raccorder le module d'admission à une chaîne d'alimentation en carburant gazeux. Une adaptation en carburant gazeux sera donc relativement facile, avec moins de risque d'erreurs, et donnera généralement un résultat satisfaisant et reproductible.

Un autre aspect de l'invention concerne un véhicule comprenant un moteur à combustion muni d'un module d'admission défini dans ce qui précède.

Encore autre aspect de l'invention concerne un procédé pour adapter un moteur à combustion à fonctionnement avec un carburant liquide à un fonctionnement avec un carburant gazeux, le procédé s'effectuant à partir d'un module d'admission défini dans ce qui précède, le procédé comprenant, ultérieurement au montage du moteur dans le véhicule:
- une étape de perçage dans laquelle un trou centré sur l'axe de perçage est percé dans la paroi, et
- une étape de montage dans laquelle un injecteur de carburant gazeux est monté dans le trou percé.

Un mode de réalisation de l'invention comprend avantageusement une ou plusieurs des caractéristiques supplémentaires suivantes, lesquelles sont décrites dans les paragraphes suivants. Ces caractéristiques supplémentaires contribuent à une adaptation au carburant gazeux de façon facile et réussie.

L'axe de perçage est avantageusement orienté vers une zone particulière de la voie d'admission où un carburant gazeux se mélange homogènement avec de l'air. Ceci contribue à la combustion efficace et, par conséquent, à une basse consommation de carburant gazeux.

La saillie correspond avantageusement à un épaississement local de la paroi traversé par l'axe de perçage. Ceci permet une zone d'appui relativement importante pour un injecteur monté dans la saillie, ce qui contribue à la rigidité mécanique et donc à la fiabilité d'une adaptation au carburant gazeux.

La saillie comprend avantageusement une face extérieure ronde centrée sur l'axe de perçage. Ceci permet de réduire des erreurs de perçage, ce qui contribue à une injection précise et reproductible.

La saillie peut comprendre une face extérieure perpendiculaire à l'axe de perçage. Ceci permet également de réduire des erreurs de perçage.

La saillie peut comprendre une marque sur une face extérieure, la marque étant disposée sur l'axe de perçage. Ceci permet également de réduire des erreurs de perçage.

La saillie peut avoir été percée de façon à ce que la saillie comprend un trou centré sur l'axe de perçage.

Un injecteur de carburant gazeux peut avoir été monté dans le trou centré sur l'axe de perçage.

Les étapes suivantes peuvent être effectuées entre l'étape de perçage et l'étape de montage mentionnées dans ce qui précède :
- une étape d'obturation dans lequel un élément d'obturation est placé dans le trou centré sur l'axe de perçage, et
- une étape de fonctionnement provisoire dans laquelle le moteur à combustion muni du module d'admission fonctionne provisoirement avec un carburant liquide. Ceci permet d'appliquer un module d'admission selon l'invention dans un véhicule et de faire fonctionner provisoirement le véhicule, par exemple, pour transporter le véhicule d'un site de fabrication vers un site de finalisation.

Une description détaillée en référence à des dessins illustre l'invention brièvement exposée précédemment, ainsi que les caractéristiques supplémentaires identifiées précédemment.

### DESCRIPTION SOMMAIRE DES DESSINS

- La figure 1 est un diagramme schématique illustrant une vue en coupe partielle d'un module d'admission dans un état initial.
- La figure 2 est un diagramme schématique illustrant une vue en coupe partielle d'un module d'admission dans un état percé.
- La figure 3 est un diagramme schématique illustrant une vue en coupe partielle d'un module d'admission dans un état provisoire.
- La figure 4 est un diagramme schématique illustrant une vue en coupe partielle d'un module d'admission dans un état adapté.
- La figure 5 est un diagramme schématique illustrant une vue en perspective d'un module d'admission dans l'état percé.
- La figure 6 est un diagramme schématique illustrant une vue en coupe totale du module d'admission dans l'état percé

### DESCRIPTION DETAILLEE

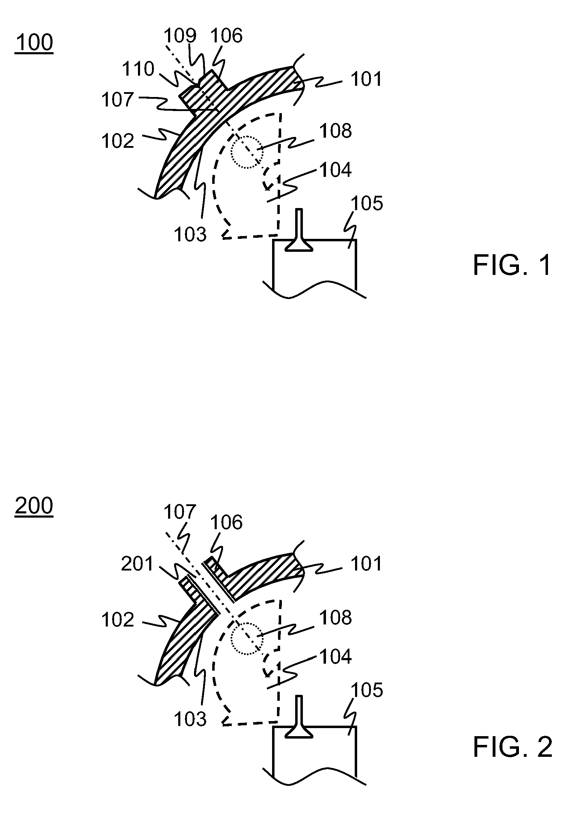

La figure 1 illustre schématiquement un module d'admission 100 pour moteur à combustion au moyen d'une vue en coupe partielle. Le module d'admission 100 illustré à la figure 1 est dans un état initial. Le module d'admission 100 comprend une paroi 101. La paroi 101 peut être composée d'un matériel communément utilisé pour des parois de modules d'admission classiques. En tout état de cause, la paroi 101 est perçable, au moins localement. La paroi 101 a une face extérieure 102 et une face intérieure 103 comme l'illustre la figure 1.

La face intérieure 103 délimite une voie d'admission 104 dans le module d'admission 100. Le module d'admission 100 apporte, par cette voie d'admission 104, de l'air à un cylindre 105 dans le moteur à combustion. Cet air apporté peut être mélangé avec un gaz d'échappement que le moteur à combustion produit et qui est recirculé.

La face extérieure 102 de la paroi 101 comprend une saillie 106. Cette saillie 106 définit un axe de perçage 107 orienté de la face extérieure 102 vers la voie d'admission 104. Plus précisément, l'axe de perçage 107 est orienté vers une zone particulière 108 de la voie d'admission 104 où un carburant gazeux se mélange homogènement avec l'air. Ceci permet une combustion efficace ce qui contribue à une basse consommation de carburant gazeux.

Dans l'exemple illustré à la figure 1, la saillie 106 correspond à un épaississement local de la paroi 101. L'axe de perçage 107 traverse cet épaississement qui peut être, par exemple, de forme cylindrique. Dans ce cas, la saillie 106 comprend une face extérieure ronde 109 avantageusement centrée sur l'axe de perçage 107. La face extérieure ronde 109 est avantageusement perpendiculaire à l'axe de perçage 107. Une marque de perçage 110 est avantageusement prévue sur la face extérieure ronde 109. La marque de perçage 110 est disposée sur l'axe de perçage 107.

Les figures 2 à 4 illustrent schématiquement des modules d'admissions 200, 300, 400 dans différents états. Les modules d'admission 200, 300, 400 illustrés aux figures 2 à 4 peuvent être obtenus en appliquant un procédé à partir du module d'admission 100 dans l'état initial illustré à la figure 1. Ce procédé sert à préparer le moteur à combustion, qui est muni du module d'admission 100 dans l'état initial, pour un fonctionnement avec du carburant gazeux. Le procédé sera appelé « procédé d'adaptation au carburant gazeux » dans ce qui suit. Le procédé d'adaptation au carburant gazeux comprend différentes étapes qui seront décrites en référence aux figures 2 à 4 dans ce qui suit.

La figure 2 illustre un module d'admission 200 dans un état percé. Ce module d'admission 200 peut être obtenu en appliquant une étape de perçage au module d'admission 100 dans l'état initial illustré à la figure 1. Dans cette étape, un trou 201 est percé dans la paroi 101 du module d'admission 100 dans l'état initial tel qu'illustré à la figure 1. Plus précisément, le trou 201 est percé le long de l'axe de perçage 107 de la face extérieure 102 vers la face intérieure 103 en traversant entièrement la saillie 106. Par conséquent, le trou 201 est coaxial par rapport à l'axe de perçage 107 et débouche sur la voie d'admission 104.

La face extérieure ronde 109 de la saillie 106, qui est centrée sur l'axe de perçage 107, ainsi que la marque de perçage 110 illustré à la figure 1, contribuent à un perçage précis avec peu de risques d'erreurs. Suite au perçage, un filetage peut être usiné dans le trou 201 afin de permettre une fixation par vissage. Lors de l'étape de perçage, des copeaux peuvent tomber dans le module d'admission. Il convient d'éviter ceci, et d'enlever d'éventuels copeaux qui se trouveront tout de même dans le module d'admission.

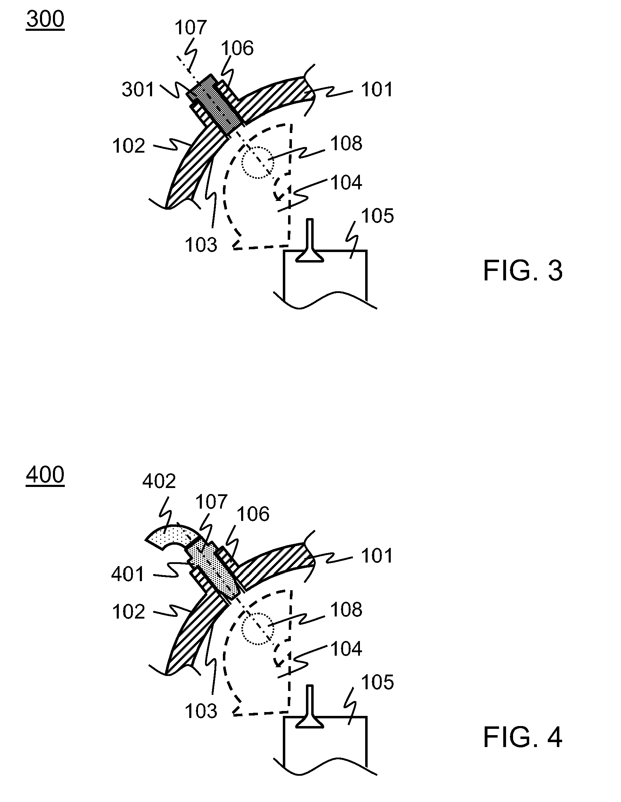

La figure 3 illustre un module d'admission 300 dans un état provisoire. Ce module d'admission 300 peut être obtenu en appliquant une étape d'obturation au module d'admission 200 dans l'état percé illustré à la figure 2. Dans cette étape, un élément d'obturation 301 est placé dans le trou 201 qui à été percé dans le module d'admission. L'élément d'obturation 301 peut être sous forme d'un bouchon vissé dans le trou 201, en supposant que le trou 201 est muni d'un filetage. L'élément d'obturation 301 peut être composé d'un matériel similaire à celui de la paroi 101. L'élément d'obturation 301 procure une étanchéité à la paroi 101 qui a été percé. Un joint non représenté à la figure 3 peut contribuer à l'étanchéité.

Le module d'admission 300 dans l'état provisoire illustré à la figure 3 permet une étape de fonctionnement provisoire. Dans cette étape, un moteur à combustion muni d'un tel module d'admission 300 fonctionne provisoirement avec du carburant liquide comme, par exemple, de l'essence. Ce fonctionnement provisoire permet de déplacer de façon autonome un véhicule dans lequel le moteur à combustion a été monté. Ceci peut être utile, par exemple, pour transporter le véhicule d'un site de fabrication vers un site de finalisation. Lors du fonctionnement provisoire, le véhicule parcourt ainsi typiquement un nombre de kilomètres relativement faible en évitant des voies publiques. Une homologation du véhicule muni du module d'admission 300 dans son état provisoire ne sera ainsi pas nécessaire. Pour un tel fonctionnement provisoire, il suffit que l'étanchéité procurée par l'élément d'obturation 301 réponde à un niveau d'exigence relativement modeste. Le niveau d'exigence sera pus élevée pour un fonctionnement provisoire plus intensif ou pour une homologation pour utilisation sur voie publique.

La figure 4 illustre un module d'admission 400 dans un état adapté. Ce module d'admission 400 peut être obtenu en appliquant une étape de montage au module d'admission 200 dans l'état percé illustré à la figure 2. Dans le cas où l'étape d'obturation a été effectuée, et le module d'admission 300 se trouve ainsi dans l'état provisoire tel qu'illustré à la figure du 3, il suffit de retirer l'élément d'obturation 301 pour effectuer l'étape de montage par la suite. Dans l'étape de montage, un injecteur 401 de carburant gazeux est monté dans le trou 201. Ceci peut se faire, par exemple, par vissage. Ensuite, l'injecteur 401 de carburant gazeux peut être raccordé à une chaîne d'alimentation en carburant gazeux au moyen d'un conduit 402. Un moteur à combustion munie d'un module d'admission 400 dans l'état adapté quel qu'illustré à la figure 4, et qui a convenablement été raccordé, peut ainsi fonctionner avec un carburant gazeux comme, par exemple, du Gaz de Pétrole Liquéfié (GPL) ou du Gaz Naturel pour Véhicule (GNV).

La saillie 106 sur la face extérieure 102 de la paroi 101 constitue une zone d'appui relativement importante pour l'injecteur 401 de carburant gazeux. Ceci contribue à la rigidité mécanique et donc à la fiabilité d'une adaptation au carburant gazeux.

L'injecteur 401 de carburant gazeux est orienté selon un axe qui correspond à l'axe de perçage 107. Cette orientation selon l'axe de perçage 107 répond avantageusement à deux critères. Un premier critère est relatif à une combustion efficace. De préférence, l'orientation est telle que l'injecteur 401 de carburant gazeux injecte un carburant gazeux dans la zone où le carburant gazeux se mélange homogènement avec l'air. Ceci permet une combustion particulièrement efficace, ce qui contribue à une basse consommation de carburant gazeux. Un second critère est relatif à un raccordement convenable et fiable. De préférence, l'orientation est telle que le conduit 402, qui raccorde l'injecteur 401 de carburant gazeux à la chaîne d'alimentation en carburant gazeux, peut suivre un trajet approprié sans que le conduit 402 ne soit pas excessivement plié. Ceci contribue à la fiabilité de l'adaptation en carburant gazeux et à une mise en oeuvre facile.

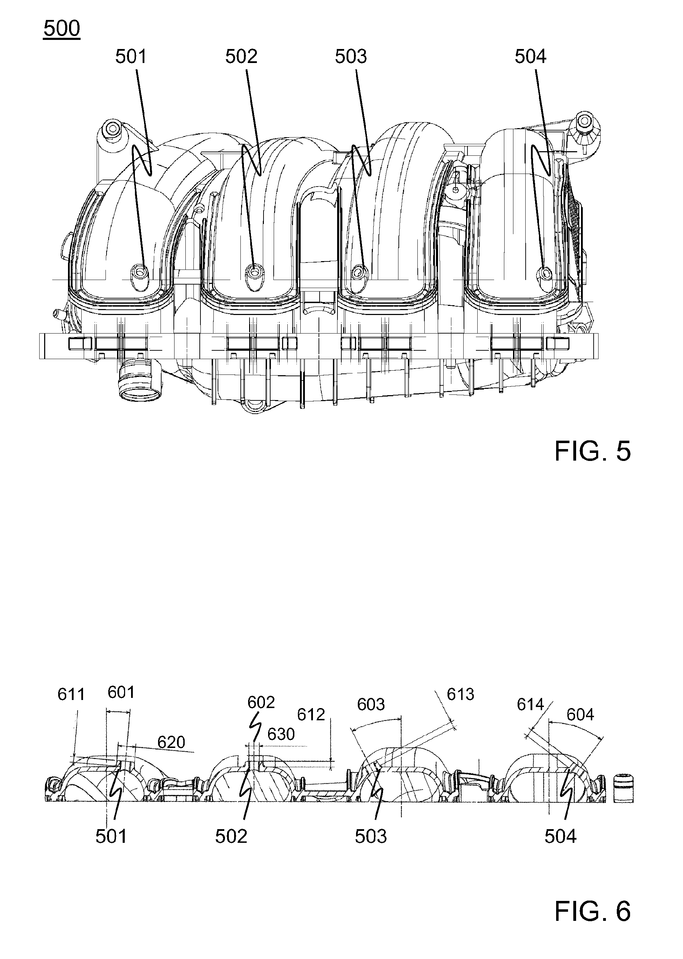

La figure 5 illustre schématiquement un module d'admission 500 dans l'état percé au moyen d'une vue en perspective. Ce module d'admission 500 peut être similaire à celui illustré à la figure 2 au moyen d'une vue en coupe partielle. Le module d'admission 500 illustré à la figure 5 est conçu pour un moteur à combustion à quatre cylindres. Par conséquent, le module d'admission 500 comprend quatre voies d'admission, un pour chaque cylindre, et quatre saillies percées 501-504, une pour chaque voie d'admission. Chacune de ces saillies 501-504 peut être similaire à la saillie 106 illustrée à la figure 2. Toutefois, les quatre saillies 501-504 illustrées à la figure 5 sont placées différemment par rapport à leurs voies admission respectives. De plus, les quatre saillies 501-504 ont des orientations différentes et, par conséquent, définissent des axes de perçage différents. Ceci est dû au fait qu'il existe pour chaque voie d'admission un emplacement et une orientation unique, et donc un axe de perçage unique, qui répond au mieux aux critères relatifs à la combustion efficace et au raccordement convenable et fiable, mentionnés dans ce qui précède.

La figure 6 illustre schématiquement le même module d'admission 500 dans l'état percé au moyen d'une vue en coupe totale. Les axes de perçage respectifs des quatre saillies percées 501-504 ont des angles respectifs 601-604 différents par rapport à un axe de référence. Les saillies percées 501-504 ont des hauteurs respectives 611-614 qui peuvent être comprises, par exemple, dans une plage de 3 à 4 millimètres. Les hauteurs respectives 611-614 peuvent être, par exemple, respectivement 3,1, 3,2, 3,4, et 4,1 mm. Les saillies percées 501-504 peuvent avoir un diamètre unique 620, par exemple, de 10 mm. Les saillies percées peuvent comprendre des trous de diamètre unique 630, par exemple, de 6 mm, munis d'un filetage similaire.

### REMARQUES FINALES

La description détaillée en référence aux figures est simplement une illustration de l'invention. L'invention peut être réalisée de nombreuses façons différentes. Afin d'illustrer ceci, quelques alternatives sont indiquées sommairement.

L'invention peut être appliquée avantageusement dans de nombreux types de produits et procédés impliquant un moteur à combustion pouvant être adapté pour fonctionner avec un carburant gazeux. L'invention peut également être appliquée, par exemple, dans un engin fixe tel qu'une pompe ou un générateur d'électricité de secours.

Il existe de nombreuses différentes formes de saillies pouvant définir un axe de perçage. Par exemple, une saillie peut être sous forme d'une rondelle ayant un centre creux sur laquelle l'axe de perçage est centré. Toutefois, une telle saillie sera moins avantageuse que la saillie 106 illustrée à la figure 1 dans la mesure où la saillie sous forme de rondelle donnera une zone d'appui moins importante. En fait, un trou percé ne traversera pas cette saillie; le trou sera juste centré sur la saillie. Par ailleurs, une saillie définissant un axe de perçage n'est pas nécessairement ronde. Par exemple, une saillie peut être de forme rectangulaire, hexagonale, ou octogonale.

De façon globale, le terme « carburant gazeux » doit être interprété de façon large. Ce terme embrasse toute substance et mélange de substances combustibles dans un état gazeux.

Bien que les dessins montrent différentes entités fonctionnelles sous forme de différents blocs, ceci n'exclut nullement des implémentations où une seule entité physique effectue plusieurs fonctions, ou plusieurs entités physiques effectuent collectivement une seule fonction. A cet égard, les dessins sont très schématiques.

Les remarques qui précèdent montrent que la description détaillée en référence aux figures, illustre l'invention plutôt qu'elle ne la limite. Les signes de références n'ont aucun caractère limitatif. Les verbes « comprendre » et « comporter » n'excluent pas la présence d'autres éléments ou d'autres étapes que ceux listés dans les revendications. Le mot « un » ou « une » précédant un élément ou une étape n'exclu pas la présence d'une pluralité de tels éléments ou de telles étapes.

## Revendications

1. Moteur à combustion équipé d'un module d'admission (100) fonctionnant avec un carburant liquide, le module d'admission (100) comprenant une paroi (101) ayant une face extérieure (102) et une face intérieure (103) délimitant au moins partiellement une voie d'admission (104) dans le module d'admission (100) par laquelle de l'air peut être apporté à un cylindre (105) dans le moteur à combustion, **caractérisé en ce que** la face extérieure (102) de la paroi (101) comprend une saillie pleine (106) définissant un axe de perçage (107) orienté de la face extérieure (102) vers la voie d'admission (104) pour montage, après perçage, dans le trou centré sur l'axe de perçage, d'un injecteur de carburant gazeux (401) .

2. Moteur selon la revendication 1, dans lequel l'axe de perçage (107) est orienté vers une zone particulière (108) de la voie d'admission (104) où un carburant gazeux se mélange homogènement avec de l'air.

3. Moteur selon l'une quelconque des revendications précédentes, la saillie (106) correspondant à un épaississement local de la paroi (101) traversé par l'axe de perçage (107).

4. Moteur selon l'une quelconque des revendications précédentes, dans lequel la saillie (106) comprend une face extérieure ronde (109) centrée sur l'axe de perçage (107).

5. Véhicule comprenant un moteur à combustion muni d'un module d'admission (100) selon l'une quelconque des revendications 1 à 4.

6. Procédé pour adapter un moteur à combustion à fonctionnement avec un carburant liquide à un fonctionnement avec un carburant gazeux, le procédé s'effectuant à partir d'un module d'admission (100) selon l'une quelconque des revendications 1 à 4, le procédé comprenant, ultérieurement au montage du moteur dans le véhicule :
- une étape de perçage dans laquelle un trou (201) centré sur l'axe de perçage (107) est percé dans la paroi (101), et
- une étape de montage dans laquelle un injecteur (401) de carburant gazeux est monté dans le trou (201) percé.

7. Procédé selon la revendication 6, dans lequel les étapes suivantes sont effectuées entre l'étape de perçage et l'étape de montage :
- une étape d'obturation dans lequel un élément d'obturation (301) est placé dans le trou (201) de perçage, et
- une étape de fonctionnement provisoire dans laquelle le moteur à combustion muni du module d'admission (100) fonctionne provisoirement avec un carburant liquide.

## Patentansprüche

1. Verbrennungsmotor, der mit einem Einlassmodul (100) ausgestattet ist, das mit einem flüssigen Kraftstoff arbeitet, wobei das Einlassmodul (100) eine Wand (101) umfasst, die eine Außenseite (102) und eine Innenseite (103) hat, die mindestens teilweise einen Einlasskanal (104) in das Einlassmodul (100) abgrenzen, durch den Luft einem Zylinder (105) in dem Verbrennungsmotor zugeführt werden kann, **dadurch gekennzeichnet, dass** die Außenseite (102) der Wand (101) einen massiven Vorsprung (106) umfasst, der eine Bohrachse (107) definiert, die von der Außenseite (102) zu dem Einlasskanal (104) ausgerichtet ist, um nach dem Bohren in die auf der Bohrachse zentrierte Bohrung einen Injektor (401) gasförmigen Kraftstoffs zu montieren.

2. Motor nach Anspruch 1, wobei die Bohrachse (107) zu einer besonderen Zone (108) des Einlasskanals (104) ausgerichtet ist, in der sich ein gasförmiger Kraftstoff homogen mit Luft vermischt.

3. Motor nach einem der vorhergehenden Ansprüche, wobei der Vorsprung (106) einer lokalen Verdickung der Wand (101), die von der Bohrachse (107) durchquert ist, entspricht.

4. Motor nach einem der vorhergehenden Ansprüche, wobei der Vorsprung (106) eine runde Außenseite (109) umfasst, die auf der Bohrachse (107) zentriert ist.

5. Fahrzeug, das einen Verbrennungsmotor umfasst, der mit einem Einlassmodul (100) nach einem der Ansprüche 1 bis 4 versehen ist.

6. Verfahren zum Anpassen eines Verbrennungsmotors, der mit einem flüssigen Kraftstoff arbeitet, an einen Betrieb mit einem gasförmigen Kraftstoff, wobei das Verfahren ausgehend von einem Einlassmodul (100) nach einem der Ansprüche 1 bis 4 ausgeführt wird, wobei das Verfahren nach der Montage des Motors in das Fahrzeug Folgendes umfasst:
- einen Bohrschritt, bei dem eine Bohrung (201), die auf der Bohrachse (107) zentriert ist, in die Wand (101) gebohrt wird, und
- einen Montageschritt, bei dem ein Injektor (401) gasförmigen Kraftstoffs in die gebohrte Bohrung (201) montiert wird.

7. Verfahren nach Anspruch 6, wobei die folgenden Schritte zwischen dem Bohrschritt und dem Montageschritt ausgeführt werden:
- ein Schließschritt, bei dem ein Verschlusselement (301) in die Bohrung (201) platziert wird, und
- ein vorläufiger Betriebsschritt, bei dem der Verbrennungsmotor, der mit dem Einlassmodul (100) versehen ist, vorläufig mit einem flüssigen Kraftstoff arbeitet.

## Claims

1. A combustion engine equipped with an intake module (100) functioning with a liquid fuel, the intake module (100) including a wall (101) having an outer surface (102) and an inner surface (103) delimiting at least partially an intake path (104) in the intake module (100) through which air can be brought to a cylinder (105) in the combustion engine, **characterized in that** the outer surface (102) of the wall (101) includes a solid projection (106) defining a drilling axis (107) oriented from the outer face (102) towards the intake path (104) for mounting, after drilling, in the hole centred on the drilling axis, of a gaseous fuel injector (401).

2. The engine according to claim 1, in which the drilling axis (107) is oriented towards a particular zone (108) of the intake path (104) where a gaseous fuel mixes homogeneously with air.

3. The engine according to any one of the preceding claims, the projection (106) corresponding to a local thickening of the wall (101) passed through by the drilling axis (107).

4. The engine according to any one of the preceding claims, in which the projection (106) includes a round outer surface (109) centred on the drilling axis (107).

5. A vehicle including a combustion engine provided with an intake module (100) according to any one of claims 1 to 4.

6. A method for adapting a combustion engine functioning with a liquid fuel to a functioning with a gaseous fuel, the method being carried out from an intake module (100) according to any one of claims 1 to 4, the method including, subsequent to the mounting of the engine in the vehicle:
- a drilling step in which a hole (201) centred on the drilling axis (107) is drilled in the wall (101), and
- a mounting step in which a gaseous fuel injector (401) is mounted in the drilled hole (201).

7. The method according to claim 6, in which the following steps are carried out between the drilling step and the mounting step:
- a plugging step in which a plugging element (301) is placed in the drilling hole (201), and
- a temporary functioning step in which the combustion engine provided with the intake module (100) functions temporarily with a liquid fuel.
